# EUROPEAN PATENT APPLICATION

(11) **EP 0 931 574 A1**
(43) Date of publication of application: **28.07.1999**
(21) Application number: 99200100.8
(22) Date of filing: 15.01.1999
(51) Int. Cl.: A63F 9/22

(54) **Viewing area divider for a display device such as a monitor or tv screen**

(30) Priority: 17.01.1998 GB 9800889
(71) Applicant: Interactive Studios Ltd., Leamington Spa CV32 5DY (GB)
(72) Inventor: Philip, Edward Oliver, CV32 7XH Leamington SPA (GB)
(74) Representative: Croston, David

(57) **Abstract**

A divider (10) for a display device, such as a monitor or TV Screen (14) comprises an elongate strip (12) for attaching the divider (10) to the monitor (14) and a sheet-like body (16) made of non-transparent material which is arranged to extend transverse to the screen (14) so that part of the screen is obscured from view of a user (20) positioned to one side of the body (16) of the divider (10). In preferred embodiments the divider can be folded, rolled or provided as a fan-like element. Alternatively the divider may comprise two sheets, each having a slot, whereby the sheets can be attached together by arranging the sheets transverse to each other and mating the respective slots together.

## Description

The invention relates to a divider for a monitor or TV screen and particularly to, although not exclusively limited to, a divider for splitting the viewing area of the monitor or TV screen into two or more discrete viewing areas.

For some time now display devices, such as a monitor or TV screen, have been able to display different pictures on different parts of the screen, for example, displaying one channel in the main screen and another channel in a box inset within the main picture. On a computer monitor different pictures can be displayed in different windows and the more powerful home computers can now run separate moving images in different windows. However, whilst the monitors may offer the facility of providing different images, they cannot prevent a person from viewing both images.

The object of the present invention is to provide a divider for a display device.

According to the invention there is provided a divider for a display device comprising attachment means for attaching the divider to the display device and a sheet-like body made at least partly of non- transparent material arranged, in use, to extend transverse to the screen so as to obscure part of the screen from the view of a user positioned to one side of the body of the divider.

In that way, part of the screen is obscured so that the picture displayed on that part of the screen cannot be viewed by the user positioned on one side of the body. The system according to the present invention has application where, for example, a computer game requires two players to play simultaneously on one screen without seeing what their opponent is doing. A typical example of such a game would be "Battleships" where it is essential that each player can only see their own ships.

The body is preferably opaque and may be decorated appropriately, for example, with artwork associated with a game.

The body may be folded for storage and may be unfolded into an extended position when arranged on the screen. Preferably, the body is folded in a concertina fold for more compact storage.

Alternatively, the body may be made from a material which can be readily rolled, for example fabric. In such a case, the material is unrolled to provide the sheet-like body.

In a further embodiment the sheet-like body comprises a fan-like arrangement comprising a plurality of elongate elements pivotally mounted together, each element being connected to the next element by means of a web of flexible material.

In any of the above embodiments the part of the body which is arranged to be located towards the lower part of the screen is preferably weighted so as to hold the divider in tension to provide a substantially rigid body.

The part of the body which is arranged towards the base of the screen preferably includes a stand for supporting the body and in the most preferred embodiment, the stand is weighted.

The body may include a transparent portion where the circumstances require it. Preferably the transparent portion comprises a coloured clear material, such as perspex. In that way, the pictures shown on the other side of the screen could be selectively coloured so that both users could have access to certain information from their opponents screen whilst other information shown in the colour of the transparent coloured portion would not be visible. Alternatively, the transparent portion could be arranged whereby one face of the portion provides a mirrored surface while the other face is transparent to provide a one-way mirror. In that way, a handicapping system could be introduced whereby one player could see information on the opponent's screen while the other player could not.

The attachment means preferably comprises a rigid strip which projects from the top of the sheet-like body and is attached to the top of the display device. The attachment could be effected by means of glue, double-sided adhesive tape, or re-usable adhesive material, such as "Blue Tack" (registered trade mark). Alternatively, a slot may be provided on the top of the screen for receiving the elongate strip.

Embodiments of the invention will now be described in detail with reference to the accompanying drawings in which:
Figure 1 is a plan view of a divider in accordance with the invention mounted on a TV screen,
Figure 2 is a perspective view of the divider of Figure 1 shown mounted to a TV screen,
Figure 3 is a perspective view of the divider of Figures 1 and 2 shown to a larger scale Figure 4 is a perspective view of another embodiment of divider in accordance with the invention,
Figure 5 is a perspective view of a further embodiment of divider in accordance with the invention,
Figure 6 is a perspective view of a still further embodiment of divider in accordance with the invention, and
Figure 7 is a perspective view of a further embodiment of divider in accordance with the invention shown on a monitor.

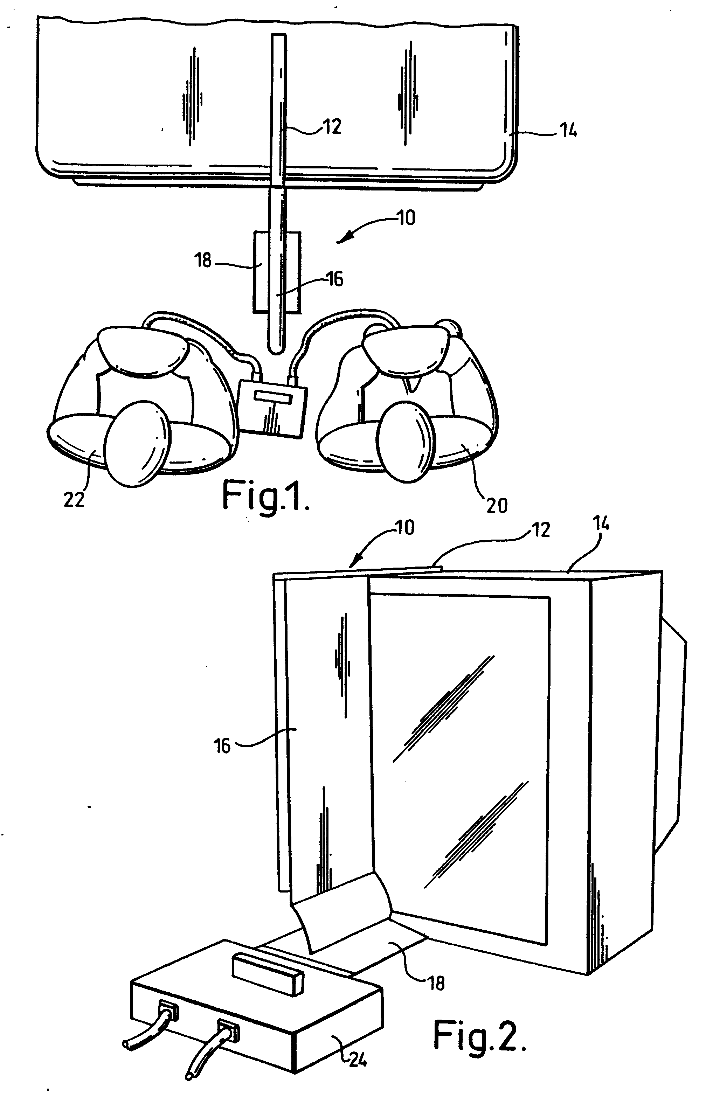

In Figures 1 to 3 a divider 10 comprises an elongate strip 12 attached to the top of a TV monitor 14 and a sheet-like body 16 with a stand 18 at the base thereof.

The divider 10 is arranged on the monitor 14 in such a manner that first and second users 20, 22 cannot see the part of the screen viewed by their opponent. The body 16 extends substantially perpendicularly to the screen of the monitor 14, and is arranged substantially vertically.

Figure 2 shows the divider 10 arranged on a monitor 14 next to a games console 24, and

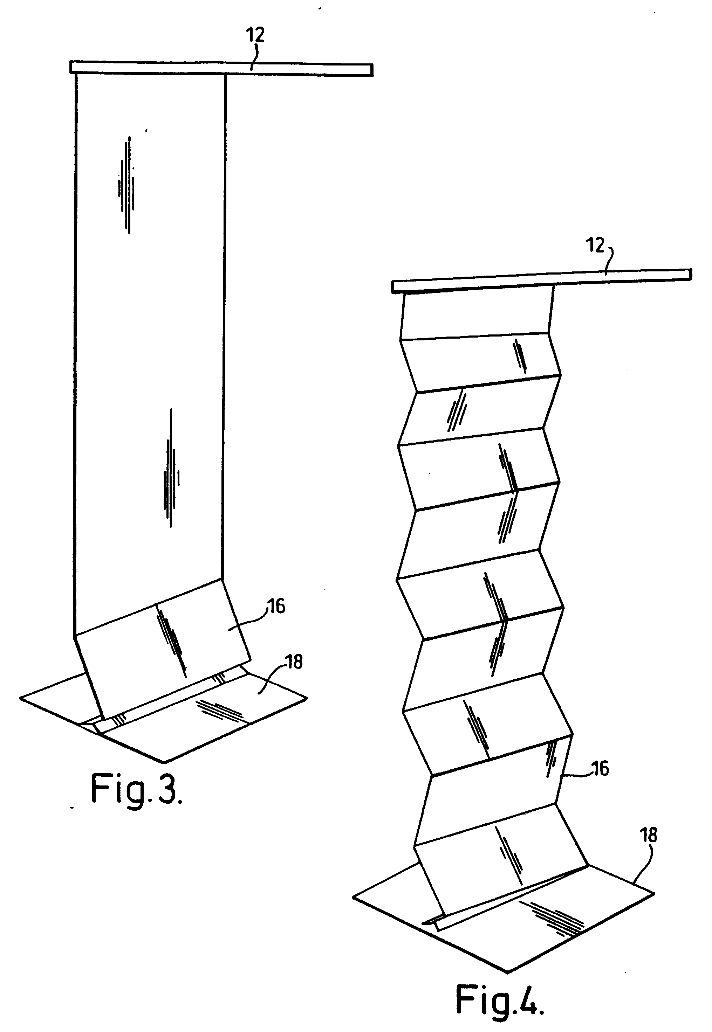

Figure 3 shows the divider to a larger scale.

Figure 4 shows an alternative divider 10 comprising an elongate strip 12, a sheet-like body 16 and a stand 18. The body 16 comprises an elongate member which is folded in concertina folds 26 to allow for compact storage of the divider when not in use.

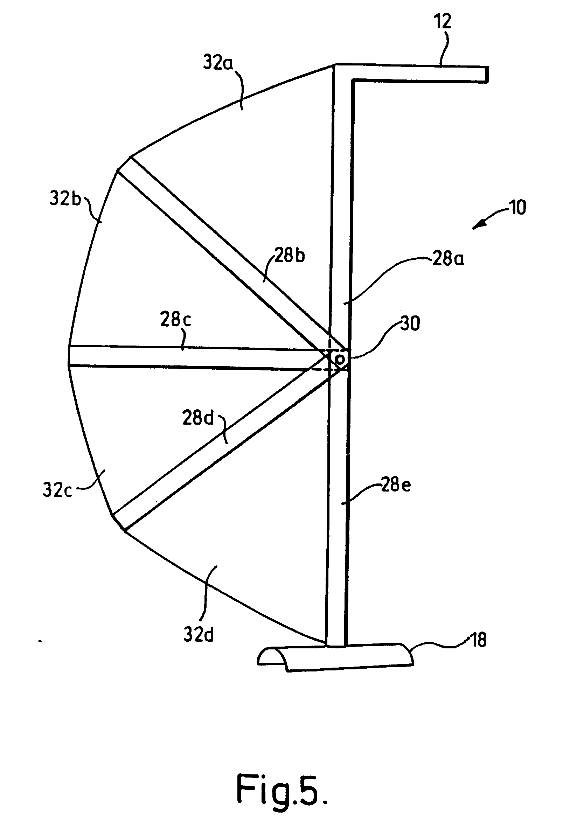

Figure 5 shows another divider 10 comprising an elongate strip 12 for attachment to the monitor 14. The divider 10 has a body 16 comprising 5 elongate members 28a to 28e which are pivotally connected at pivot point 30. The elongate member 28a is integral with the elongate strip 12 which extends perpendicular to the member 28a from an end thereof spaced from the pivot point 30. The member 28e has a stand 18 at the end thereof spaced from the pivot point 30. Each member 28a to 28e is connected to its neighbour by means of respective flexible webs 32a to 32d. When the divider 10 is not in use, the members 28a to 28e can be folded together for compact storage. When the divider 10 is in use, the members 28a to 28e are folded out so that the flexible webs 32a to 32d are taut and the webs then act as a non-transparent barrier to prevent the first and second users from seeing their opponents side of the screen.

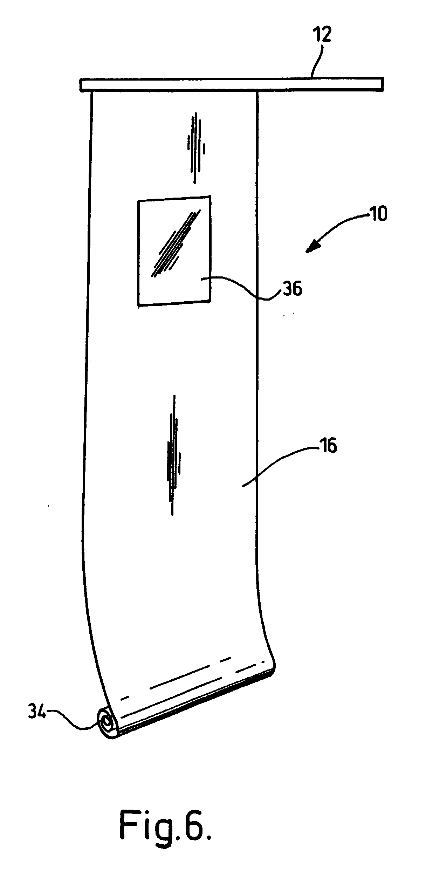

Figure 6 relates to a further form of divider 10 in accordance with the invention. The divider 10 comprises an elongate strip 12 for attachment to the top of the TV monitor and an elongate sheet-like body 16 made from flexible material which is rolled on to a batten 34. In use, the body 16 is unrolled and the weight of the batten 34 holds the body in tension.

The body 16 may further comprise a portion 36 of transparent material or semitransparent material. The portion 36 may comprise a sheet of transparent material with a mirror coating on one side so as to form a one way mirror. In that way, one user is able to see his opponent's screen while the other user cannot. That arrangement is useful where handicapping of one player is required.

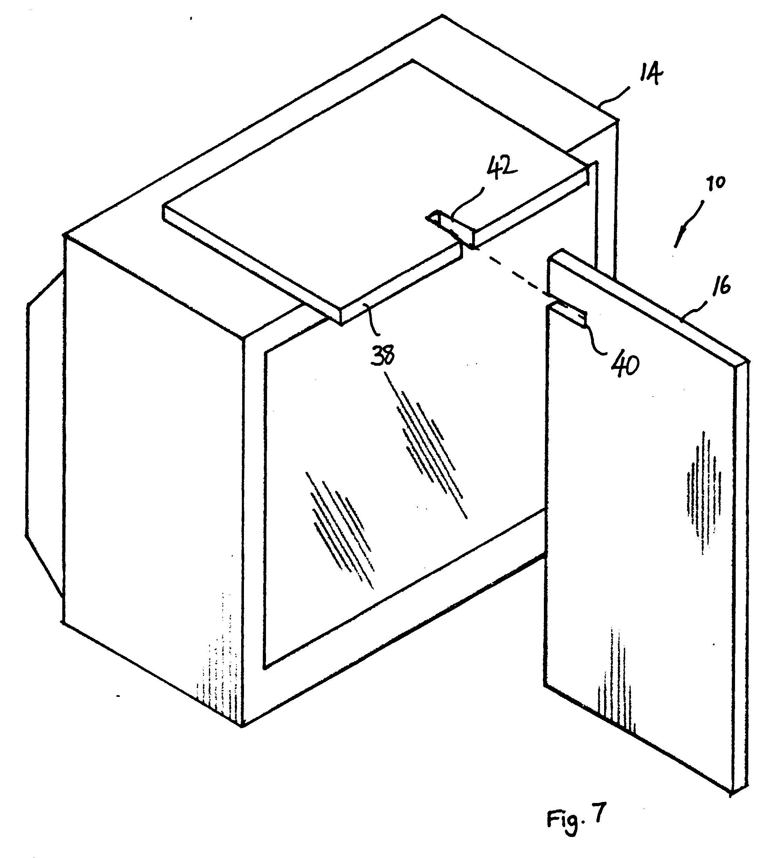

In fig. 7 an alternative embodiment of divider 10 is shown. Parts corresponding to parts in figs. 1 and 2 carry the same reference numerals.

The divider 10 comprises a sheet-like body 16 and a sheet member 38.

The sheet-like body 16 has a slot 40 formed in and running transverse to an edge thereof. The slot 40 is formed in the edge of the body 16 which is closest to the monitor 14 when the body 16 is in place. The slot 40 is formed toward an end of the edge, the top end in use.

The sheet member 38 has a slot 42 formed in an edge thereof, the slot 42 running transverse to the edge. The slot is formed toward the mid point of the edge of the sheet member 38.

In order to mount the divider 10 on the monitor 14, the body 16 and sheet member 38 are arranged perpendicular to one another. The slots 40, 42 are then mated so that part of the sheet member 38 is received in the slot 40 and part of the body 16 is received in the slot 42.

The sheet member 38 is then placed on top of the monitor 14 so that the body 16 abuts the screen of the monitor and splits the screen into two. The body 16 and sheet member 38 are dimensioned so that the weight of the sheet member 38 on top of the monitor is sufficient to retain the body 16 in place on the monitor 14.

The body 16 and sheet member 38 may both be provided with both slots 40, 42 so that they can be used interchangably. Alternatively, only the body 16 may include a slot 40 and the sheet member 38 may have no slots.

The body 16 and sheet member 38 are preferably made from stiff paper or card or aminated paper or card to provide some rigidity to the divider. In that way the body 16 and/or the sheet member 38 may be printed, for example, with game information.

The invention has particular application to video games where two users wish to play head to head on one screen and where seeing the opponent's part of the screen could unfairly advantage one side. With the present invention, the divider 10 can be mounted on the TV monitor 14 and two opponents can play head to head without being able to see their opponents screen. This opens up possibilities for more complex games on a single screen system. For example, in a game of "Battleships" it has never previously been possible for two players to play the game head to head on one screen, whereas the present invention provides that possibility.

It wiil be appreciated that, given a sufficiently wide screen, multiple dividers 10 may be provided to allow multiple screen divisions. For example, a wide screen monitor may allow two or three dividers to be attached to provide three or four, respectively, screen segments.

It is envisaged that the divider 10 in accordance with any of the above embodiments would be decorated with artwork appropriate to the game with which it is sold.

Whilst the invention has been described with specific reference to the playing of video games, it will be appreciated that the system could be used to divide a television so that one channel can be viewed on one half and a second channel can be viewed on the other half without distracting the other viewers.

## Claims

1. A divider for a display device comprising attachment means for attaching the divider to the display device and a sheet-like body made at least partly of non-transparent material arranged, in use, to extend transverse to the screen so as to obscure part of the screen from the view of the user positioned to one side of the body of the divider.

2. A divider arranged on a screen of a display device and extending transverse to the screen, the divider comprising attachment means for attaching the divider to the display device and a sheet-like body made at least partly of non-transparent material arranged so as to obscure part of the screen from the view of a user positioned to one side of the body of the divider.

3. A divider according to claim 1 or 2 in which the body is opaque.

4. A divider according to claim 1, 2 or 3 in which the body is foldable for storage and may be unfolded into an extended position when arranged on the screen.

5. A divider according to claim 4 in which the body is folded in a concertina fold for more compact storage.

6. A divider according to claim 1, 2 or 3 in which the body is made from a material which can be readily rolled, whereby the material can be unrolled to provide the sheet-like body and rolled for compact storage.

7. A divider according to claim 1, 2 or 3 in which the sheet-like body comprises a fan-like arrangement comprising a plurality of elongate elements pivotally mounted together at a pivot point, each element being connected to the next element by means of a web of flexible material.

8. A divider according to any preceding claim in which the part of the sheet-like body which is arranged to be located towards the lower part of the screen is weighted so as to hold the divider in tension to provide a substantially rigid sheet-like body.

9. A divider according to any preceding claim in which the part of the body which is arranged towards the base of the screen, in use, includes a stand for supporting the body.

10. A divider according to claim 9 in which the stand is weighted.

11. A divider according to any preceding claim in which the body includes a transparent portion.

12. A divider according to claim 11 in which the transparent portion comprises a coloured clear material.

13. A divider according to claim 11 or 12 in which the transparent portion is arranged such that one face of the portion provides a mirrored surface while the other face is transparent so as to provide a one-way mirror.

14. A divider according to any preceeding claim in which the attachment means comprises a rigid strip which projects from the top of the sheet-like body and is attachable to the top of the display device.

15. A divider according to claim 14 in which the top of the screen includes a slot dimensioned to received the elongate rigid strip to effect attachment of the divider to the display device.

16. A divider according to claim 1, 2 or 3 in which the attachment means comprises a sheet member and the sheet-like body includes a slot in an edge thereof and running transverse to the edge, whereby the sheet-like body can be secured to the attachment means by arranging the sheet-like body transverse to the sheet member of the attachment means and inserting the sheet member into the slot whereby part of the sheet member is received in the slot.

17. A divider according to claim 16 in which the sheet member of the attachment means comprises a slot formed in an edge thereof running transverse to the edge whereby the sheet-like body and the sheet member are secured together by matina the respective slots together so that part of the sheet member is received in the slot in the sheet-like body and part of the sheet-like body is received in the slot in the sheet member.

18. A divider according to claim 16 or 17 in which the slot in the sheet-like body is formed toward an end of the edge thereof.

19. A divider according to claim 17 in which the slot in the sheet member is formed toward the middle of the edge thereof.

20. A display device comprising a screen and a divider for the screen, the divider comprising attachment means attaching the divider to the display device and a sheet-like body extending transverse to the screen, the body being made at least partly of non-transparent material and being arranged so as to obscure part of the screen from the view of a user positioned to one side of the body of the divider.

21. A display device comprising a screen and a divider as set out in any of claims 1 to 19.
